# EUROPEAN PATENT APPLICATION

(11) **EP 4 742 823 A2**
(43) Date of publication of application: **13.05.2026**
(21) Application number: 26169142.2
(22) Date of filing: 24.11.2022
(51) Int. Cl.: H04W 76/28

(54) **METHOD AND APPARATUS FOR ENHANCED DISCONTINUOUS RECEPTION CONFIGURATION IN MOBILE COMMUNICATIONS**

(30) Priority: 25.11.2021 US 202163283243 P
(62) Divisional of application: 22897898.7
(71) Applicant: MediaTek Singapore Pte. Ltd., Singapore 138628 (SG)
(72) Inventor: KUNT, Mehmet, Cambourne, Cambridge, CB23 6DW (GB); SALAH, Abdellatif, Cambourne, Cambridge, CB23 6DW (GB); JOSE, Pradeep, Cambourne, Cambridge, CB23 6DW (GB)
(74) Representative: Pfenning, Meinig & Partner mbB

(57) **Abstract**

Various solutions for enhanced discontinuous reception (DRX) configuration/operation for extended reality (XR) and cloud gaming traffic with respect to user equipment and network apparatus in mobile communications are proposed. An apparatus may receive a configuration from a network node. The apparatus may activate an on-duration timer for an on-duration of a DRX cycle. The apparatus may determine whether downlink (DL) data are received from the network node. The apparatus may stop the on-duration timer according to the configuration in an event that the DL data are received.

## Description

### CROSS REFERENCE TO RELATED PATENT APPLICATION(S)

The present disclosure is part of a non-provisional application claiming the priority benefit of U.S. Provisional Patent Application No. US 63/283,243, filed 25 November 2021, the content of which being incorporated by reference in its entirety.

### TECHNICAL FIELD

The present disclosure is generally related to mobile communications and, more particularly, to enhanced discontinuous reception (DRX) configuration/operation for extended reality (XR) and cloud gaming traffic with respect to user equipment and network apparatus in mobile communications.

### BACKGROUND

Unless otherwise indicated herein, approaches described in this section are not prior art to the claims listed below and are not admitted as prior art by inclusion in this section.

In current New Radio (NR) framework, 3^{rd} Generation Partnership Project (3GPP) Release 15 (Rel-15) and Release 16 (Rel-16) specified connected mode discontinuous reception (cDRX) operation which allows for UE power saving by switching off the UE transmit (Tx)/receive (Rx) chains when there is no data to be received from the base station or to be transmitted by the UE. The UE can be configured a DRX cycle comprising an on-duration and an off-duration with a periodicity. The UE may wake up within the on-duration for data reception/transmission and go to sleep within the off-duration for power saving. One of the limitations/challenges of the Rel-15/Rel-16 cDRX design when applied to the XR/cloud gaming traffic is that the existing cDRX periodicities do not align with the augmented reality (AR)/virtual reality (VR) periodicities. The data burst of AR/VR traffic could be mismatched with the on-duration of DRX cycle.

In addition, the AR/VR traffic modelling introduced a jitter which means that the traffic is not exactly periodic, but the arrival could be random within a specific jitter interval (e.g., [-4, +4] millisecond (ms) for downlink (DL) AR/VR). Some data may come early, and some data may be delayed. One straightforward but costly solution is to force the UE to wake up more frequently, but then the power consumption gain is compromised. The UE may waste power due to the uncertainties. The power performance and user experience will become bad.

Accordingly, how to improve the DRX operations for adapting to audio/video streams for XR and/or cloud gaming traffic becomes an important issue for UE power saving in the newly developed wireless communication network. Therefore, there is a need to provide proper schemes to perform DRX operations for XR and/or cloud gaming applications.

### SUMMARY

The following summary is illustrative only and is not intended to be limiting in any way. That is, the following summary is provided to introduce concepts, highlights, benefits and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to propose solutions or schemes that address the aforementioned issues pertaining to enhanced DRX configuration/operation for XR and cloud gaming traffic with respect to user equipment and network apparatus in mobile communications.

In one aspect, a method may involve an apparatus receiving a configuration from a network node. The method may also involve the apparatus activating an on-duration timer for an on-duration of a DRX cycle. The method may further involve the apparatus determining whether DL data are received from the network node. The method may further involve the apparatus stopping the on-duration timer according to the configuration in an event that the DL data are received.

In one aspect, a method may involve an apparatus receiving at least one DRX configuration configuring an on-duration bundle pattern from a network node. The method may also involve the apparatus enabling the on-duration bundle pattern according to an indication from the network node. The method may further involve the apparatus monitoring a physical downlink control channel (PDCCH) transmitted from a network node according to the on-duration bundle pattern.

In one aspect, a method may involve an apparatus receiving a plurality of DRX configurations. The method may also involve the apparatus receiving an indication indicating at least one of the DRX configurations. The method may further involve the apparatus activating the at least one of the DRX configurations according to the indication. The method may further involve the apparatus monitoring a physical downlink control channel (PDCCH) transmitted from a network node according to at least one activated DRX configuration.

In one aspect, a method may involve an apparatus measuring at least one of a latency and a jitter of a data packet. The method may also involve the apparatus reporting a measurement result of the at least one of the latency and the jitter to a network node.

It is noteworthy that, although description provided herein may be in the context of certain radio access technologies, networks and network topologies such as Long-Term Evolution (LTE), LTE-Advanced, LTE-Advanced Pro, 5th Generation (5G), New Radio (NR), Extended reality (XR), cloud gaming, Internet-of-Things (IoT) and Narrow Band Internet of Things (NB-IoT), Industrial Internet of Things (IIoT), and 6th Generation (6G), the proposed concepts, schemes and any variation(s)/derivative(s) thereof may be implemented in, for and by other types of radio access technologies, networks and network topologies. Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation in order to clearly illustrate the concept of the present disclosure.
FIG. 1 is a diagram depicting an example scenario under schemes in accordance with implementations of the present disclosure.
FIG. 2 is a diagram depicting an example scenario under schemes in accordance with implementations of the present disclosure.
FIG. 3 is a diagram depicting an example scenario under schemes in accordance with implementations of the present disclosure.
FIG. 4 is a diagram depicting an example scenario under schemes in accordance with implementations of the present disclosure.
FIG. 5 is a diagram depicting an example scenario under schemes in accordance with implementations of the present disclosure.
FIG. 6 is a block diagram of an example communication system in accordance with an implementation of the present disclosure.
FIG. 7 is a flowchart of an example process in accordance with an implementation of the present disclosure.
FIG. 8 is a flowchart of an example process in accordance with an implementation of the present disclosure.
FIG. 9 is a flowchart of an example process in accordance with an implementation of the present disclosure.
FIG. 10 is a flowchart of an example process in accordance with an implementation of the present disclosure.

### DETAILED DESCRIPTION OF PREFERRED IMPLEMENTATIONS

Detailed embodiments and implementations of the claimed subject matters are disclosed herein. However, it shall be understood that the disclosed embodiments and implementations are merely illustrative of the claimed subject matters which may be embodied in various forms. The present disclosure may, however, be embodied in many different forms and should not be construed as limited to the exemplary embodiments and implementations set forth herein. Rather, these exemplary embodiments and implementations are provided so that description of the present disclosure is thorough and complete and will fully convey the scope of the present disclosure to those skilled in the art. In the description below, details of well-known features and techniques may be omitted to avoid unnecessarily obscuring the presented embodiments and implementations.

### Overview

Implementations in accordance with the present disclosure relate to various techniques, methods, schemes and/or solutions pertaining to enhanced DRX configuration/operation for XR and cloud gaming traffic with respect to user equipment (UE) and network apparatus in mobile communications. According to the present disclosure, a number of possible solutions may be implemented separately or jointly. That is, although these possible solutions may be described below separately, two or more of these possible solutions may be implemented in one combination or another.

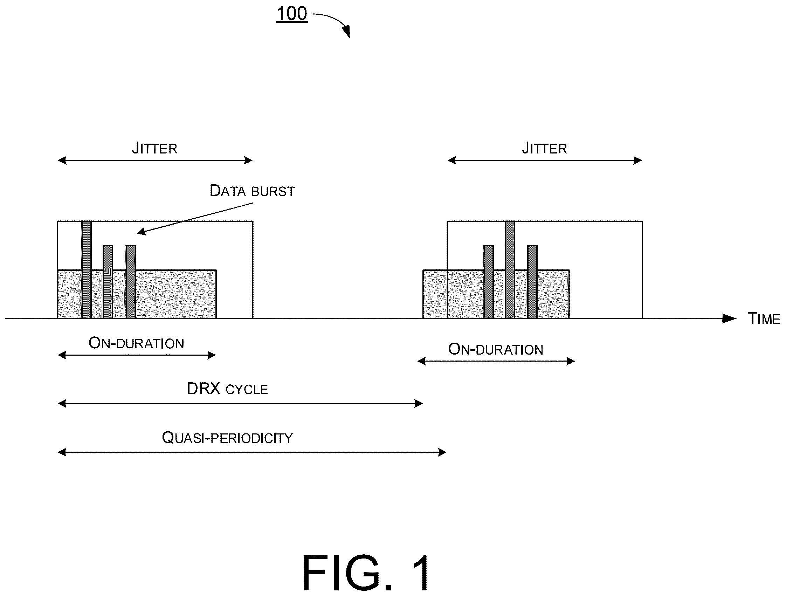

FIG. 1 illustrates an example scenario 100 under schemes in accordance with implementations of the present disclosure. Scenario 100 involves at least a UE and a network node, which may be a part of a wireless communication network (e.g., an LTE network, a 5G/NR network, an IoT network). The UE is configured by the network node with a DRX configuration. The DRX configuration may comprise a DRX cycle and an on-duration. The DRX cycle comprises an on-duration/active time and an off-duration. The UE may further be configured to receive XR/cloud gaming traffic with a quasi-periodicity. Quasi-periodicity means that the traffic is not exactly periodic. Sometimes the traffic may come early, and sometimes the traffic may come later. The burst depends on the scenarios of the XR/cloud gaming applications. There are no clear/specific/fixed boundaries for the traffic arrival time.

One of the issues when applying DRX operation on XR traffic is that the DRX cycle mismatch with the quasi-periodic XR traffic. As shown in FIG. 1, legacy DRX cycle values do not match the quasi-periodicity of XR traffic. The quasi-periodicity of XR traffic could be longer or shorter than the periodicity of DRX cycle. Over time, the difference can build up and on-duration of DRX cycle could be completely outside of (i.e., out-of-sync with) the burst arrival period. The burst could arrive in the off-duration of DRX cycle. The UE may partially or completely miss the burst.

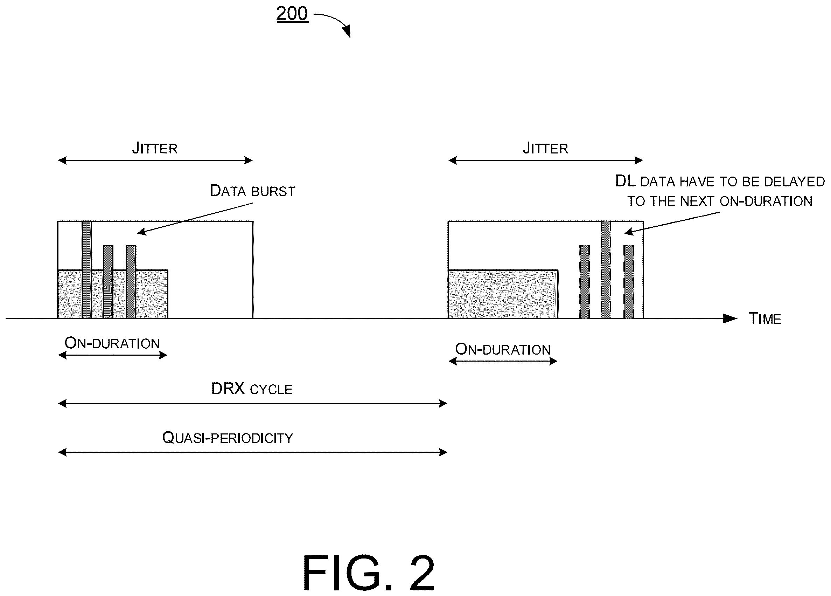

FIG. 2 illustrates an example scenario 200 under schemes in accordance with implementations of the present disclosure. Scenario 200 involves at least a UE and a network node, which may be a part of a wireless communication network (e.g., an LTE network, a 5G/NR network, an IoT network). Another issue when applying DRX operation on XR traffic is that jitter can occupy a large time interval (e.g., [-4, +4] ms for XR traffic). Jitter is the timer interval that burst may arrive. Since the data packets for video/audio streams are large, the transmitter (e.g., XR server/network node) needs to perform data compression to reduce the packet size. Such data compression may cause different delay time on the data packets. Therefore, the time period of jitter could be long and uncertain.

Thus, even if the DRX cycle mismatch issue is resolved, covering the whole jitter period with on-duration could have a large impact on the UE power consumption. The UE needs to wake up for a longer time for covering the whole jitter period which leads to significant UE power consumption. On the other hand, if the on-duration is smaller than jitter, some DL data might be delayed until the next on-duration. The data reception performance will become worse. Therefore, there is a need to provide some DRX operation enhancement schemes for XR/cloud gaming traffic.

In view of the above, the present disclosure proposes several schemes pertaining to enhanced DRX configuration/operation for XR and cloud gaming traffic with respect to user equipment and network apparatus in mobile communications. According to the schemes of the present disclosure, some enhancements on DRX operation may be introduced to resolve the aforementioned issues. For example, the on-duration timer of DRX operation may be stopped earlier. In addition, a bundle of on-duration occasions may be configured. On the other hand,, multiple DRX configurations may be applied on the UE simultaneously. The UE may further provide some assistance information to the network node to help adjust DRX parameters. Thus, the DRX operation may be adapted to accommodate the uncertainties of the XR/cloud gaming traffic. Accordingly, the UE power consumption can be well controlled by the enhanced DRX operation without compromise on data reception/transmission performance. The user experiences and UE power performance can be improved.

The DRX active time may be determined according to the definitions in 3GPP. For example, when DRX is configured, the active time for serving cells in a DRX group includes the time while drx-onDurationTimer or drx-InactivityTimer configured for the DRX group is running, drx-RetransmissionTimerDL or drx-RetransmissionTimerUL is running on any Serving Cell in the DRX group, ra-ContentionResolutionTimer or msgB-ResponseWindow is running, a Scheduling Request is sent on physical uplink control channel (PUCCH) and is pending, or a PDCCH indicating a new transmission addressed to the Cell-RadioNetworkTemporaryIdentifier (C-RNTI) of the Media Access Control (MAC) entity has not been received after successful reception of a Random Access Response for the Random Access Preamble not selected by the MAC entity among the contention-based Random Access Preamble.

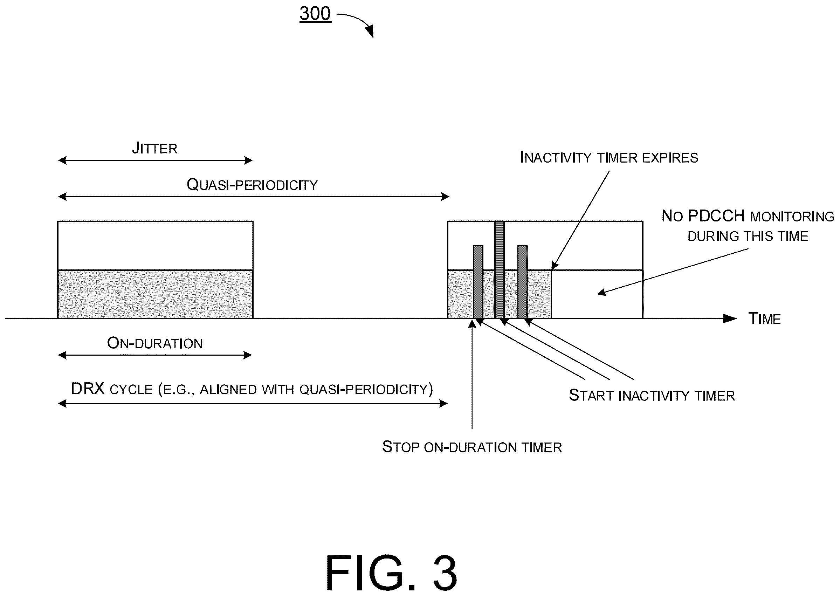

FIG. 3 illustrates an example scenario 300 under schemes in accordance with implementations of the present disclosure. Scenario 300 involve at least a UE and a network node, which may be a part of a wireless communication network (e.g., an LTE network, a 5G/NR network, an IoT network or a 6G network). FIG. 3 illustrates an example of stopping an on-duration timer of DRX operation earlier. The UE may receive a configuration from the network node. The UE may activate an on-duration timer for an on-duration of a DRX cycle. The on-duration timer defines the duration at the beginning of a DRX cycle. The UE may determine whether DL data are received from the network node. The DL data may be carried on the physical downlink shared channel (PDSCH) and may comprise at least one of an XR stream, a cloud gaming stream and a video/audio stream. The UE may stop the on-duration timer according to the configuration in an event that the DL data are received.

The configuration may comprise an indication to control (e.g., enable/disable) the early stop of the on-duration timer. The UE may be configured to receive at least one of a radio resource control (RRC) configuration, downlink control information (DCI) and a DL MAC media access control (MAC) control element (MAC CE) from the network node. The UE may obtain the configuration from at least one of the RRC configuration, the DCI and the DL MAC CE. The UE may enable/disable the early stop of the on-duration timer according to the indication.

As shown in FIG. 3, the UE may be configured a DRX configuration with the on-duration. Generally, the UE needs to monitor DL data (e.g., monitor the physical downlink control channel (PDCCH)) during the whole on-duration. However, if no DL data is scheduled in the on-duration, the UE may waste power for monitoring the PDCCH. Thus, with the enhanced DRX operation proposed in the present disclosure, the UE may be configured to determine whether the DL data is received. The UE may stop the on-duration timer earlier when the DL data is received. Then, the UE may activate an inactivity timer for monitoring. The inactivity timer defines the duration after the PDCCH occasion in which a PDCCH indicates a new UL or DL transmission. The inactivity timer is used to monitor PDCCH for the next data packet in the same DL transmission burst. In a case that a next data packet is received, the UE may re-start the inactivity time to keep monitoring if there is a next data packet. In a case that no data packet is received and the inactivity timer is expired, the UE may be configured to stop the on-duration and transit into an off-duration for power saving. Thus, the on-duration timer may be stopped before the end of the on-duration. The UE does not need to monitor the PDCCH in the remaining period of the on-duration.

This could be useful in scenarios where the burst duration is small (e.g., compared to jitter/on-duration). For example, in some scenarios of the XR/cloud gaming traffic, the data burst may be concentrated. The DL data may arrive in a small period within the on-duration. If the UE can determine that the DL data are received successfully, the UE does not need to monitor the whole on-duration. The UE power consumption can be reduced.

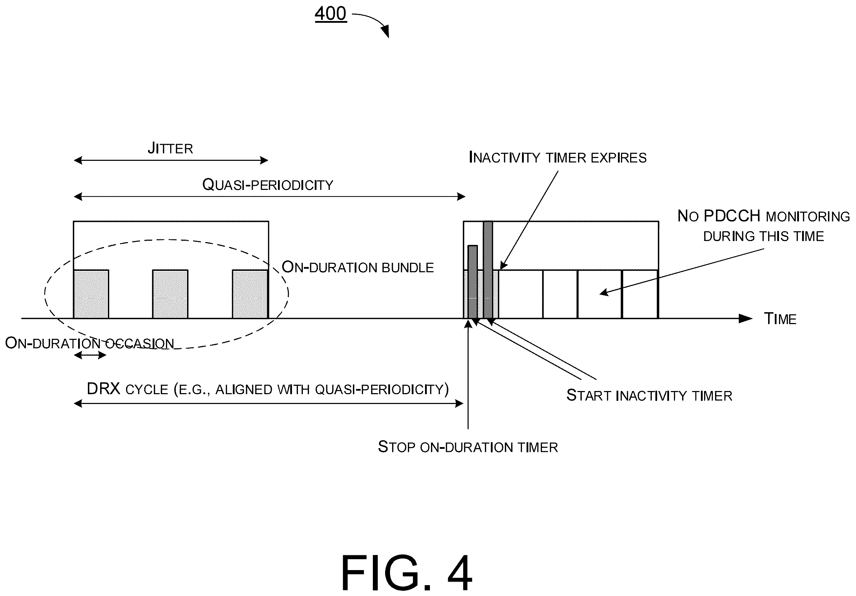

FIG. 4 illustrates an example scenario 400 under schemes in accordance with implementations of the present disclosure. Scenario 400 involve at least a UE and a network node, which may be a part of a wireless communication network (e.g., an LTE network, a 5G/NR network, an IoT network or a 6G network). FIG. 4 illustrates an example of an enhanced DRX configuration/operation using bundles of on-duration occasions. The UE may receive at least one DRX configuration configuring an on-duration bundle pattern from the network node. The UE may enable the on-duration bundle pattern according to an indication from the network node. The UE may monitor PDCCH according to the on-duration bundle pattern. The on-duration bundle pattern may comprise a plurality of on-duration occasions.

The UE may be configured to receive at least one of an RRC configuration, DCI and a DL MAC CE from the network node. The UE may obtain the on-duration bundle pattern from at least one of the RRC configuration, the DCI and the DL MAC CE. The UE may further enable/disable the on-duration occasions dynamically according to an indication (e.g., a bit field) from the network node.

As shown in FIG. 4, group(s) or bundle(s) of on-duration occasions or periods may be defined. An on-duration bundle may comprise a plurality of on-duration occasions. The on-duration bundle pattern may comprise regular distribution of on-duration occasions with the same length or irregular distribution of on-duration occasions with different lengths. The on-duration bundle may be configured with a periodicity that aligns with the quasi-periodicity of the XR/could gaming traffic. The length of the on-duration bundle may also align with the jitter of the XR/could gaming traffic.

With on-duration bundle pattern, if the UE receives DL data on at least one of the on-duration occasions, the UE may stop monitoring other on-duration occasions within the same bundle. For example, the UE determine that the DL data are received within the first on-duration occasion. Then, the UE may stop monitoring the second and third on-duration occasions within the same bundle.

The on-duration bundle pattern may further be updated by the network node. For example, the starting occasion number/position within the bundle may be updated. Each of the on-duration occasions may be enabled/disabled dynamically by a bit field. The update may be signalled by the network node. The UE may be configured to receive DCI or a DL MAC CE from the network node. The UE may update the on-duration bundle pattern according to the DCI or the DL MAC CE.

On the other hand, the on-duration bundle pattern may be updated based on the location of the on-duration occasions with DL data within the current on-duration bundle. For example, the following on-duration bundle patterns may be updated based on which occasion has DL data within the current bundle. The network node and/or the UE may update the on-duration bundle pattern according to the location of the on-duration occasions with the DL data.

In some implementations, the on-duration bundle may be alternatively realized by multiple DRX configurations. The on-duration bundle pattern may be configured/assembled by a plurality of DRX configurations. The UE may receive a plurality of DRX configurations. The UE may determine the on-duration bundle pattern based on the plurality of DRX configurations. The receiving data during the on-duration/active time of a DRX configuration of a set of DRX configurations may impact the UE on using other DRX configurations within the set. For example, in an event that the UE receives DL data during the on-duration/active time of a DRX configuration, it can skip monitoring PDCCH using the other DRX configuration(s) for a certain amount of time. This can be achieved by stopping/cancelling other DRX timers (e.g., on-duration timer, inactivity timer, etc.) for other DRX configurations.

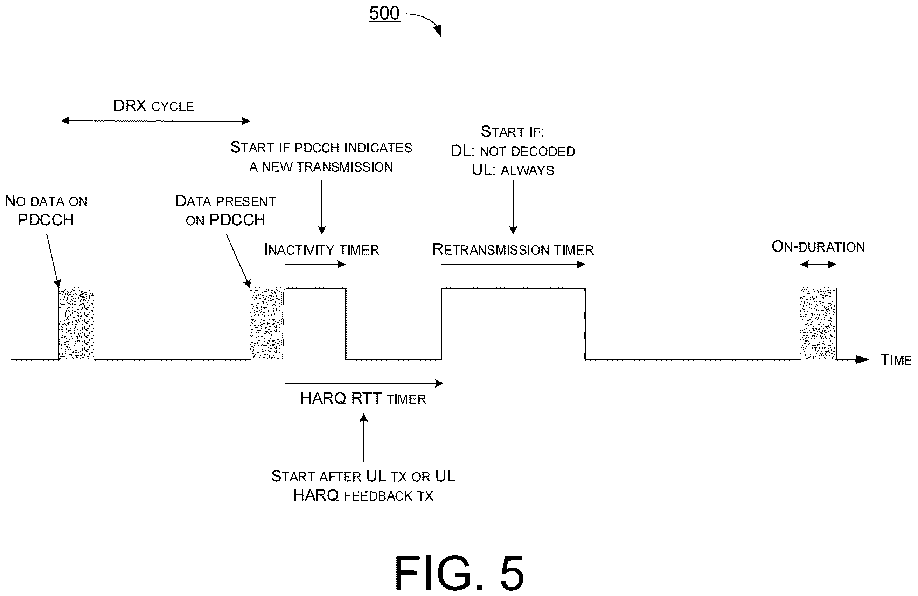

Another DRX operation enhancement scheme is using multiple DRX configurations for the UE. FIG. 5 illustrates example scenario 500 under schemes in accordance with implementations of the present disclosure. Scenario 500 involves at least a UE and a network node, which may be a part of a wireless communication network (e.g., an LTE network, a 5G/NR network, an IoT network or a 6G network). The UE may be configured by the network node with a plurality of DRX configurations. Each DRX configuration may comprise a DRX cycle, a periodicity and timer parameters. The timer parameters may comprise at least one of an on-duration timer, an inactivity timer, a hybrid automatic repeat request (HARQ) round trip time (RTT) timer and a retransmission timer.

The network node (e.g., XR server or base station) may configure multiple DRX configurations for the UE. Specifically, the UE may receive a plurality of DRX configurations. The UE may receive an indication indicating at least one of the DRX configurations. The UE may activate the at least one of the DRX configuration according to the indication. The UE may receive DCI or a DL MAC CE and obtain the indication from the DCI or the DL MAC CE. Then, the UE may monitor a PDCCH transmitted from the network node according to the at least one activated DRX configuration. The PDCCH may indicate DL data for a stream. The stream may comprise at least one of an XR stream, a cloud gaming stream and a video/audio stream.

Specifically, the network node may dynamically signal the UE which DRX configuration to use by taking into consideration the latency, the jitter, packet error rate (PER), channel conditions, UE power consumption, etc. A new DCI field, DCI format or a MAC CE may be introduced to signal the DRX configuration to be used. The DRX configuration may be associated to at least one of a configured grant configuration, a semi-persistent scheduling (SPS) configuration, a group of configured grant configuration and a group of SPS configuration. The DRX configuration may be also associated to at least one of UL traffic (e.g., pose/control information) and DL traffic (e.g., video data).

In some implementations, two or more simultaneous DRX configurations may be activated for multiple traffic priorities. At least one of the activated DRX configuration may correspond to a traffic priority. For example, one DRX configuration may be used for I-frames and one DRX configuration may be used for P-frames. Different traffic types (e.g., I-frames and P-frames) may be applied by different DRX configurations with different periodicity, different on-duration and inactivity timer, etc. In another example, one DRX configuration may be used for voice and one for DRX configuration may be used video. Different DRX settings may be determined depending on the location of the XR/cloud gaming server. For example, edge server requires smaller on-duration since packets are not fragmented and with less jitter.

On the other hand, the UE may assess its power consumption and report a preferred DRX settings per each or a subset of DRX configurations or per data stream (e.g., video, audio, etc.). The UE may be configured to report a preferred DRX configuration/setting to the network node. The DRX configuration may be adjusted based on the UE feedback information (e.g., gaming commands, pose information, etc.). For example, the UE may auto-switch to different/another DRX configurations/settings after a specific UL transmission. The UE may switch to another DRX configuration following the sending of an I-frame Request. Alternatively, the network node may configure the UE with another DRX configuration following the reception of an I-frame request. In some implementations, the UE may signal the switch to the network node (e.g., via UL control information, MAC CE, etc.). The UE may be configured to transmit a signal to the network node to switch the DRX configuration.

In some implementations, a DRX start offset of an on-duration may be enabled/disabled or configured per DRX configuration. For example, a DRX start offset may be configured for the DRX configuration associated to the DL traffic (e.g., with jitter) and not configured for the DRX configuration associated to the UL traffic (e.g., no jitter). The UE may adjust a start time of an on-duration of a DRX cycle dynamically according to the DRX start offset.

A further DRX operation enhancement scheme is providing UE assistance to the network to help with dynamic adjustment of DRX parameters. Specifically, the UE may measure at least one of a latency and a jitter of a data packet. The stream may comprise at least one of an XR stream, a cloud gaming stream and a video/audio stream. The UE may report a measurement result of the at least one of the latency and the jitter to a network node. For example, for UL traffic, the UE may indicate the arrival time pattern for UL traffic (e.g., with respect to the on-duration). For performing the measurement, the UE may receive a reference packet from the network node. The UE may measure at least one of the latency and the jitter according to the reference packet. In some implementations, other UE assistance information may be provided to the network node. The network node may adjust/update the DRX parameters/configurations dynamically according to the UE assistance information.

### Illustrative Implementations

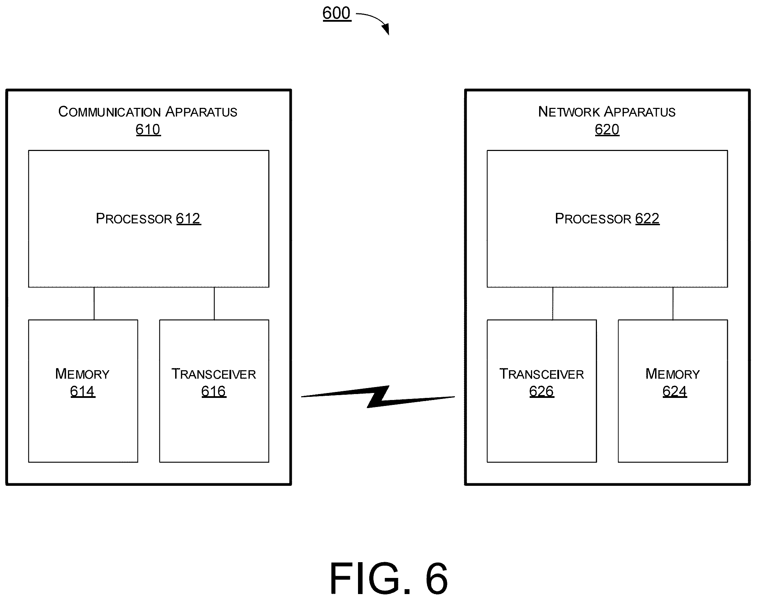

FIG. 6 illustrates an example communication system 600 having an example communication apparatus 610 and an example network apparatus 620 in accordance with an implementation of the present disclosure. Each of communication apparatus 610 and network apparatus 620 may perform various functions to implement schemes, techniques, processes and methods described herein pertaining to enhanced DRX configuration/operation for XR and cloud gaming traffic with respect to user equipment and network apparatus in wireless communications, including scenarios/schemes described above as well as processes 700, 800, 900 and 1000 described below.

Communication apparatus 610 may be a part of an electronic apparatus, which may be a UE such as a portable or mobile apparatus, a wearable apparatus, a wireless communication apparatus or a computing apparatus. For instance, communication apparatus 610 may be implemented in a smartphone, a smartwatch, a personal digital assistant, a digital camera, or a computing equipment such as a tablet computer, a laptop computer or a notebook computer. Communication apparatus 610 may also be a part of a machine type apparatus, which may be an IoT, NB-IoT, or IIoT apparatus such as an immobile or a stationary apparatus, a home apparatus, a wire communication apparatus or a computing apparatus. For instance, communication apparatus 610 may be implemented in a smart thermostat, a smart fridge, a smart door lock, a wireless speaker or a home control center. Alternatively, communication apparatus 610 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. Communication apparatus 610 may include at least some of those components shown in FIG. 6 such as a processor 612, for example. Communication apparatus 610 may further include one or more other components not pertinent to the proposed scheme of the present disclosure (e.g., internal power supply, display device and/or user interface device), and, thus, such component(s) of communication apparatus 610 are neither shown in FIG. 6 nor described below in the interest of simplicity and brevity.

Network apparatus 620 may be a part of an electronic apparatus, which may be a network node such as a base station, a small cell, a router or a gateway. For instance, network apparatus 620 may be implemented in an eNodeB in an LTE, LTE-Advanced or LTE-Advanced Pro network or in a gNB in a 5G, NR, IoT, NB-IoT or IIoT network. Alternatively, network apparatus 620 may be implemented in the form of one or more IC chips such as, for example and without limitation, one or more single-core processors, one or more multi-core processors, or one or more RISC or CISC processors. Network apparatus 620 may include at least some of those components shown in FIG. 6 such as a processor 622, for example. Network apparatus 620 may further include one or more other components not pertinent to the proposed scheme of the present disclosure (e.g., internal power supply, display device and/or user interface device), and, thus, such component(s) of network apparatus 620 are neither shown in FIG. 6 nor described below in the interest of simplicity and brevity.

In one aspect, each of processor 612 and processor 622 may be implemented in the form of one or more single-core processors, one or more multi-core processors, or one or more CISC processors. That is, even though a singular term "a processor" is used herein to refer to processor 612 and processor 622, each of processor 612 and processor 622 may include multiple processors in some implementations and a single processor in other implementations in accordance with the present disclosure. In another aspect, each of processor 612 and processor 622 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 612 and processor 622 is a special-purpose machine specifically designed, arranged and configured to perform specific tasks including enhanced DRX configuration/operation for XR and cloud gaming traffic with respect to user equipment and network apparatus in mobile communications in accordance with various implementations of the present disclosure.

In some implementations, communication apparatus 610 may also include a transceiver 616 coupled to processor 612 and capable of wirelessly transmitting and receiving data. In some implementations, communication apparatus 610 may further include a memory 614 coupled to processor 612 and capable of being accessed by processor 612 and storing data therein. In some implementations, network apparatus 620 may also include a transceiver 626 coupled to processor 622 and capable of wirelessly transmitting and receiving data. In some implementations, network apparatus 620 may further include a memory 624 coupled to processor 622 and capable of being accessed by processor 622 and storing data therein. Accordingly, communication apparatus 610 and network apparatus 620 may wirelessly communicate with each other via transceiver 616 and transceiver 626, respectively. To aid better understanding, the following description of the operations, functionalities and capabilities of each of communication apparatus 610 and network apparatus 620 is provided in the context of a mobile communication environment in which communication apparatus 610 is implemented in or as a communication apparatus or a UE and network apparatus 620 is implemented in or as a network node of a communication network.

Under various proposed schemes in accordance with the present disclosure pertaining to enhanced DRX configuration/operation for XR and cloud gaming traffic, processor 612 may receive, via transceiver 616, a configuration from network node apparatus 620. Processor 612 may activate an on-duration timer for an on-duration of a DRX cycle. Then, processor 612 may determine whether DL data are received from network apparatus 620. The processor 612 may stop the on-duration timer according to the configuration in an event that the DL data are received.

In some implementations, processor 612 may receive at least one of an RRC configuration, DCI and a DL MAC CE and obtain the configuration from at least one of the RRC configuration, the DCI and the DL MAC CE.

In some implementations, processor 612 may activate an inactivity timer to monitor PDCCH for a next data packet.

In some implementations, processor 612 may stop DL data monitoring in an event that the inactivity timer is expired. The inactivity timer may expire before an end of the on-duration.

Under various proposed schemes in accordance with the present disclosure pertaining to enhanced DRX configuration/operation for XR and cloud gaming traffic, processor 612 may receive, via transceiver 616, at least one DRX configuration configuring an on-duration bundle pattern from network apparatus 620. Processor 612 may enable the on-duration bundle pattern according to an indication from network apparatus 620. Then, processor 612 may monitor, via transceiver 616, a PDCCH according to the on-duration bundle pattern.

In some implementations, the on-duration bundle pattern may comprise a plurality of on-duration occasions.

In some implementations, processor 612 may receive, via transceiver 616, DCI or a DL MAC CE from network apparatus 320 and update the on-duration bundle pattern according to the DCI or the DL MAC CE.

In some implementations, processor 612 may receive, via transceiver 616, DL data on at least one of the on-duration occasions in a bundle and stop monitoring other on-duration occasions in the bundle.

In some implementations, processor 612 may update the on-duration bundle pattern according to a location of the on-duration occasions with the DL data.

In some implementations, lengths of the on-duration occasions may be identical or different.

In some implementations, the on-duration bundle pattern may be configured by a plurality of DRX configurations.

Under various proposed scheme in accordance with the present disclosure pertaining to enhanced DRX configuration/operation for XR and cloud gaming traffic, processor 612 may receive, via transceiver 616, a plurality of DRX configurations. Processor 612 may receive, via transceiver 616, an indication indicating at least one of the DRX configurations. Then, processor 612 may activate the at least one of the DRX configuration according to the indication. Processor 612 may monitor, via transceiver 616, a PDCCH transmitted from network apparatus 620 according to the at least one activated DRX configuration.

In some implementations, processor 612 may receive, via transceiver 616, DCI or a DL MAC CE and obtain the indication from the DCI or the DL MAC CE.

In some implementations, processor 612 may report, via transceiver 616, a preferred DRX configuration to network apparatus 620. Processor 612 may transmit, via transceiver 616, a signal to network apparatus 620 to switch the DRX configuration.

In some implementations, at least one of the DRX configurations is associated to at least one of a configured grant configuration, an SPS configuration, a group of configured grant configuration and a group of SPS configuration.

In some implementations, at least one of the DRX configurations is associated to at least one of UL traffic and DL traffic.

In some implementations, processor 612 may switch to another DRX configuration automatically after a specific UL transmission.

In some implementations, at least one of the activated DRX configurations may correspond to a traffic priority.

Under various proposed scheme in accordance with the present disclosure pertaining to enhanced DRX configuration/operation for XR and cloud gaming traffic, processor 612 may measure, via transceiver 616, at least one of a latency and a jitter of a data packet. Then, processor 612 may report, via transceiver 616, a measurement result of the at least one of the latency and the jitter to network apparatus 620.

In some implementations, processor 612 may receive, via transceiver 616, a reference packet from network apparatus 620. Processor 612 may measure, via transceiver 616, at least one of the latency and the jitter according to the reference packet.

### Illustrative Processes

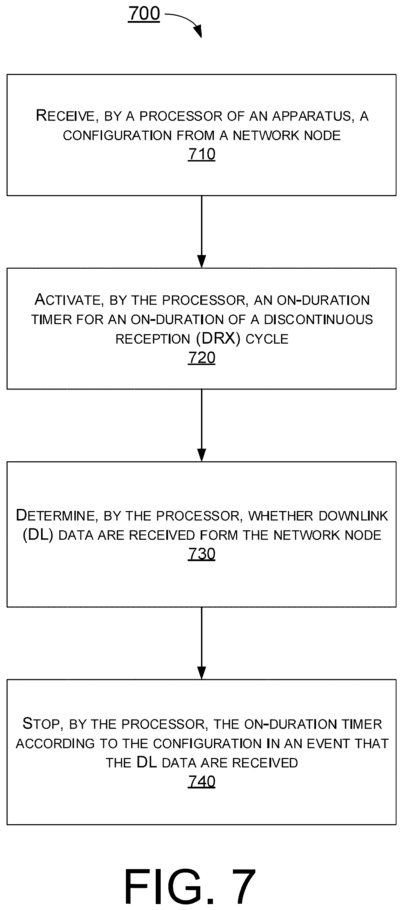

FIG. 7 illustrates an example process 700 in accordance with an implementation of the present disclosure. Process 700 may be an example implementation of schemes described above, whether partially or completely, with respect to enhanced DRX configuration/operation for XR and cloud gaming traffic with the present disclosure. Process 700 may represent an aspect of implementation of features of communication apparatus 610. Process 700 may include one or more operations, actions, or functions as illustrated by one or more of blocks 710, 720, 730 and 740. Although illustrated as discrete blocks, various blocks of process 700 may be divided into additional blocks, combined into fewer blocks, or eliminated, depending on the desired implementation. Moreover, the blocks of process 700 may executed in the order shown in FIG. 7 or, alternatively, in a different order. Process 700 may be implemented by communication apparatus 610 or any suitable UE or machine type devices. Solely for illustrative purposes and without limitation, process 700 is described below in the context of communication apparatus 610. Process 700 may begin at block 710.

At block 710, process 700 may involve processor 612 of apparatus 610 receiving a configuration from a network node. Process 700 may proceed from block 710 to block 720.

At block 720, process 700 may involve processor 612 activating an on-duration timer for an on-duration of a DRX cycle. Process 700 may proceed from block 720 to block 730.

At block 730, process 700 may involve processor 612 determining whether DL data are received from the network node. Process 700 may proceed from block 730 to block 740.

At block 740, process 700 may involve processor 612 stopping the on-duration timer according to the configuration in an event that the DL data are received.

In some implementations, process 700 may involve processor 612 receiving DC and obtaining the DRX start offset from the DCI.

In some implementations, process 700 may involve processor 612 receiving a DL MAC CE and obtaining the DRX start offset from the DL MAC CE.

In some implementations, process 700 may involve processor 612 receiving at least one of an RRC configuration, DCI and a DL MAC CE and obtaining the configuration from at least one of the RRC configuration, the DCI and the DL MAC CE.

In some implementations, process 700 may involve processor 612 activating an inactivity timer to monitor PDCCH for a next data packet.

In some implementations, process 700 may involve processor 612 stopping DL data monitoring in an event that the inactivity timer is expired. The inactivity timer may expire before an end of the on-duration.

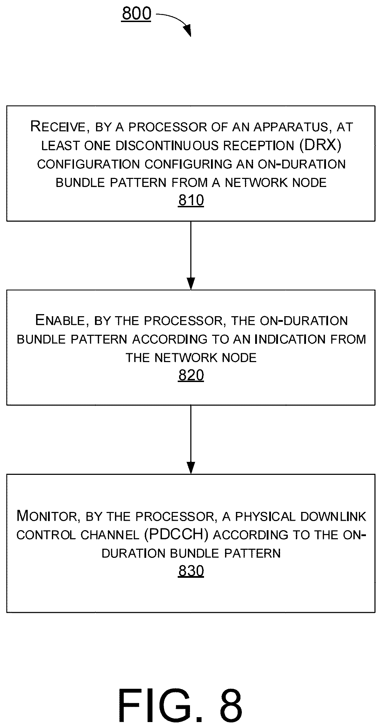

FIG. 8 illustrates an example process 800 in accordance with an implementation of the present disclosure. Process 800 may be an example implementation of schemes described above, whether partially or completely, with respect to enhanced DRX configuration/operation for XR and cloud gaming traffic with the present disclosure. Process 800 may represent an aspect of implementation of features of communication apparatus 610. Process 800 may include one or more operations, actions, or functions as illustrated by one or more of blocks 810, 820 and 830. Although illustrated as discrete blocks, various blocks of process 800 may be divided into additional blocks, combined into fewer blocks, or eliminated, depending on the desired implementation. Moreover, the blocks of process 800 may executed in the order shown in FIG. 8 or, alternatively, in a different order. Process 800 may be implemented by communication apparatus 610 or any suitable UE or machine type devices. Solely for illustrative purposes and without limitation, process 800 is described below in the context of communication apparatus 610. Process 800 may begin at block 810.

At 810, process 800 may involve processor 612 of apparatus 610 receiving at least one DRX configuration configuring an on-duration bundle pattern from a network node. Process 800 may proceed from 810 to 820.

At 820, process 800 may involve processor 612 enabling the on-duration bundle pattern according to an indication from the network node. Process 800 may proceed from 820 to 830.

At 830, process 800 may involve processor 612 monitoring PDCCH according to the on-duration bundle pattern.

In some implementations, process 800 may involve processor 612 receiving DCI or a DL MAC CE from the network node and updating the on-duration bundle pattern according to the DCI or the DL MAC CE.

In some implementations, process 800 may involve processor 612 receiving DL data on at least one of the on-duration occasions in a bundle. Process 800 may involve processor 612 stopping monitoring other on-duration occasions in the same bundle.

In some implementations, process 800 may involve processor 612 updating the on-duration bundle pattern according to a location of the on-duration occasions with the DL data.

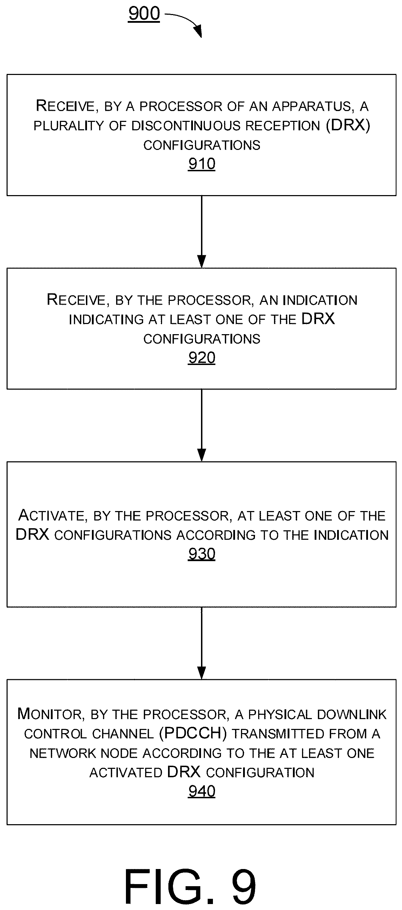

FIG. 9 illustrates an example process 900 in accordance with an implementation of the present disclosure. Process 900 may be an example implementation of schemes described above, whether partially or completely, with respect to enhanced DRX configuration/operation for XR and cloud gaming traffic with the present disclosure. Process 900 may represent an aspect of implementation of features of communication apparatus 610. Process 900 may include one or more operations, actions, or functions as illustrated by one or more of blocks 910, 920, 930 and 940. Although illustrated as discrete blocks, various blocks of process 900 may be divided into additional blocks, combined into fewer blocks, or eliminated, depending on the desired implementation. Moreover, the blocks of process 900 may executed in the order shown in FIG. 9 or, alternatively, in a different order. Process 900 may be implemented by communication apparatus 610 or any suitable UE or machine type devices. Solely for illustrative purposes and without limitation, process 900 is described below in the context of communication apparatus 610. Process 900 may begin at block 910.

At 910, process 900 may involve processor 612 of apparatus 610 receiving a plurality of DRX configurations. Process 900 may proceed from 910 to 920.

At 920, process 900 may involve processor 612 receiving an indication indicating at least one of the DRX configurations. Process 900 may proceed from 920 to 930.

At 930, process 900 may involve processor 612 activating the at least one of the DRX configurations according to the indication. Process 900 may proceed from 930 to 940.

At 940, process 900 may involve processor 612 monitoring a PDCCH transmitted from a network node according to the at least one activated DRX configuration.

In some implementations, process 900 may involve processor 612 receiving DCI or a DL MAC CE and obtaining the indication from the DCI or the DL MAC CE.

In some implementations, process 900 may involve processor 612 reporting a preferred DRX configuration to the network node.

In some implementations, process 900 may involve processor 612 transmitting a signal to the network node to switch the DRX configuration.

In some implementations, process 900 may involve processor 612 switching to another DRX configuration automatically after a specific UL transmission.

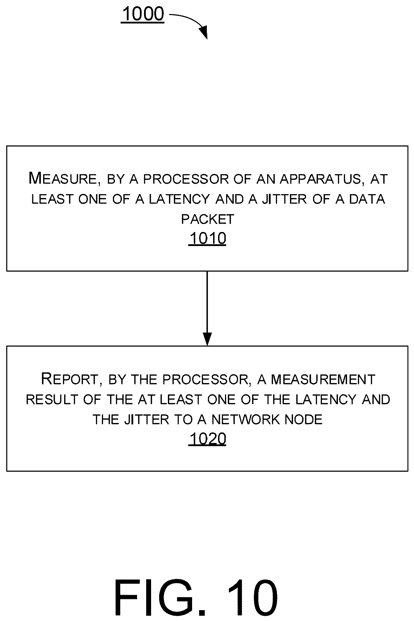

FIG. 10 illustrates an example process 1000 in accordance with an implementation of the present disclosure. Process 1000 may be an example implementation of schemes described above, whether partially or completely, with respect to enhanced DRX configuration/operation for XR and cloud gaming traffic with the present disclosure. Process 1000 may represent an aspect of implementation of features of communication apparatus 610. Process 1000 may include one or more operations, actions, or functions as illustrated by one or more of blocks 1010 and 1020. Although illustrated as discrete blocks, various blocks of process 900 may be divided into additional blocks, combined into fewer blocks, or eliminated, depending on the desired implementation. Moreover, the blocks of process 1000 may executed in the order shown in FIG. 10 or, alternatively, in a different order. Process 1000 may be implemented by communication apparatus 610 or any suitable UE or machine type devices. Solely for illustrative purposes and without limitation, process 1000 is described below in the context of communication apparatus 610. Process 1000 may begin at block 1010.

At 1010, process 1000 may involve processor 612 of apparatus 610 measuring at least one of a latency and a jitter of a data packet. Process 1000 may proceed from 1010 to 1020.

At 1020, process 1000 may involve processor 612 reporting a measurement result of the at least one of the latency and the jitter to a network node.

In some implementations, process 1000 may involve processor 612 receiving a reference packet from the network node. Process 1000 may involve processor 612 measuring at least one of the latency and the jitter according to the reference packet.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. **In** addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope and spirit of the present disclosure. Accordingly, the various implementations disclosed herein are not intended to be limiting, with the true scope and spirit being indicated by the following claims.

The subject-matter of the present invention relates, inter alia, to the following aspects:
1. A method, comprising:
   receiving, by a processor of an apparatus, a configuration from a network node;
   activating, by the processor, an on-duration timer for an on-duration of a discontinuous reception (DRX) cycle;
   determining, by the processor, whether downlink (DL) data are received from the network node; and
   stopping, by the processor, the on-duration timer according to the configuration in an event that the DL data are received.
2. The method of aspect 1, further comprising:
   receiving, by the processor, at least one of a radio resource control (RRC) configuration, downlink control information (DCI) and a downlink (DL) MAC media access control (MAC) control element (MAC CE); and
   obtaining, by the processor, the configuration from at least one of the RRC configuration, the DCI and the DL MAC CE.
3. The method of aspect 1, further comprising:
   activating, by the processor, an inactivity timer to monitor a physical downlink control channel (PDCCH) for a next data packet.
4. The method of aspect 3, further comprising:
   stopping, by the processor, DL data monitoring in an event that the inactivity timer is expired.
5. A method, comprising:
   receiving, by a processor of an apparatus, at least one discontinuous reception (DRX) configuration configuring an on-duration bundle pattern from a network node;
   enabling, by the processor, the on-duration bundle pattern according to an indication from the network node; and
   monitoring, by the processor, a physical downlink control channel (PDCCH)according to the on-duration bundle pattern.
6. The method of aspect 5, wherein the on-duration bundle pattern comprises a plurality of on-duration occasions.
7. The method of aspect 5, further comprising:
   receiving, by the processor, downlink control information (DCI) or a downlink (DL) MAC media access control (MAC) control element (MAC CE) from the network node; and
   updating, by the processor, the on-duration bundle pattern according to the DCI or the DL MAC CE.
8. The method of aspect 5, further comprising:
   receiving, by the processor, downlink (DL) data on at least one of the on-duration occasions in a bundle; and
   stopping, by the processor, monitoring other on-duration occasions in the bundle.
9. The method of aspect 8, further comprising:
   updating, by the processor, the on-duration bundle pattern according to a location of the on-duration occasions with the DL data.
10. The method of aspect 5, wherein lengths of the on-duration occasions are identical or different.
11. The method of aspect 5, wherein the on-duration bundle pattern is configured by a plurality of DRX configurations.
12. A method, comprising:
   receiving, by a processor of an apparatus, a plurality of discontinuous reception (DRX) configurations;
   receiving, by the processor, an indication indicating at least one of the DRX configurations;
   activating, by the processor, the at least one of the DRX configurations according to the indication; and
   monitoring, by the processor, a physical downlink control channel (PDCCH) transmitted from a network node according to the at least one activated DRX configuration.
13. The method of Aspect 12, further comprising:
   receiving, by the processor, downlink control information (DCI) or a downlink (DL) MAC media access control (MAC) control element (MAC CE); and
   obtaining, by the processor, the indication from the DCI or the DL MAC CE.
14. The method of Aspect 12, further comprising:
   reporting, by the processor, a preferred DRX configuration to the network node; or
   transmitting, by the processor, a signal to the network node to switch the DRX configuration.
15. The method of Aspect 12, wherein at least one of the DRX configurations is associated to at least one of a configured grant configuration, a semi-persistent scheduling (SPS) configuration, a group of configured grant configuration and a group of SPS configuration.
16. The method of Aspect 12, wherein at least one of the DRX configurations is associated to at least one of uplink (UL) traffic and downlink (DL) traffic.
17. The method of Aspect 12, further comprising:
   switching, by the processor, to another DRX configuration automatically after a specific uplink (UL) transmission.
18. The method of Aspect 12, wherein at least one of the activated DRX configurations corresponds to a traffic priority.
19. A method, comprising:
   measuring, by a processor of an apparatus, at least one of a latency and a jitter of a data packet; and
   reporting, by the processor, a measurement result of the at least one of the latency and the jitter to a network node.
20. The method of aspect 19, further comprising:
   receiving, by the processor, a reference packet from the network node; and
   measuring, by the processor, at least one of the latency and the jitter according to the reference packet.

## Claims

1. A method, comprising:
receiving, by a processor of an apparatus, a configuration from a network node, wherein the configuration comprises an indication to enable an early stop of an on-duration timer;
activating, by the processor, an on-duration timer for an on-duration of a discontinuous reception (DRX) cycle;
determining, by the processor, whether downlink (DL) data are received from the network node;
stopping, by the processor, the on-duration timer before an end of the on-duration according to the configuration in an event that the DL data are received; and
activating, by the processor, an inactivity timer to monitor a physical downlink control channel (PDCCH) for a next data packet.

2. The method of claim 1, further comprising:
receiving, by the processor, at least one of a radio resource control (RRC) configuration, downlink control information (DCI) and a downlink (DL) MAC media access control (MAC) control element (MAC CE); and
obtaining, by the processor, the configuration from at least one of the RRC configuration, the DCI and the DL MAC CE.

3. The method of claim 1, further comprising:
stopping, by the processor, DL data monitoring and transitioning into an off-duration before the end of the on-duration in an event that the inactivity timer is expired.

4. An apparatus, comprising:
a transceiver which, during operation, wirelessly communicates; and
a processor communicatively coupled to the transceiver such that, during operation, the processor performs operations comprising:
receiving, via the transceiver, a configuration from a network node, wherein the configuration comprises an indication to enable an early stop of an on-duration timer;
activating an on-duration timer for an on-duration of a discontinuous reception (DRX) cycle;
determining whether downlink (DL) data are received from the network node;
stopping the on-duration timer before an end of the on-duration according to the configuration in an event that the DL data are received; and
activating an inactivity timer to monitor a physical downlink control channel (PDCCH) for a next data packet.

5. The apparatus of claim 4, wherein the processor further performs operations comprising:
receiving, via the transceiver, at least one of a radio resource control (RRC) configuration, downlink control information (DCI) and a downlink (DL) MAC media access control (MAC) control element (MAC CE); and
obtaining the configuration from at least one of the RRC configuration, the DCI and the DL MAC CE.

6. The apparatus of claim 4, wherein the processor further performs operations comprising:
stopping DL data monitoring and transitioning into an off-duration before the end of the on-duration in an event that the inactivity timer is expired.
